(19) Europäisches Patentamt
European Patent Office
Office européen des brevets

(11) Veröffentlichungsnummer: **0 515 823 A1**

(12) **EUROPÄISCHE PATENTANMELDUNG**

(21) Anmeldenummer: **92106537.1**

(22) Anmeldetag: **15.04.92**

(51) Int. Cl.5: **B62B 3/04**, B62B 5/00,
A47F 5/13

(30) Priorität: **02.05.91 DE 4114352**

(43) Veröffentlichungstag der Anmeldung:
**02.12.92 Patentblatt 92/49**

(84) Benannte Vertragsstaaten:
**BE CH DE FR GB LI NL SE**

(71) Anmelder: **Convotherm-Elektrogeräte GmbH**
**Talstrasse 35**
**W-8111 Untereglfing(DE)**

(72) Erfinder: **Riepl, Alfons**
**Harbergerstrasse 23**
**W-8114 Uffing(DE)**

(74) Vertreter: **Zmyj, Erwin, Dipl.-Ing.**
**Rosenheimer Strasse 52**
**W-8000 München 80(DE)**

(54) **Gitterrost zur Aufnahme von Geschirr.**

(57) Der Gitterrost zur Aufnahme von Geschirr umfaßt einen Grundrahmen (2) und nach einer Richtung ausgerichtete parallel zueinander liegende Roststäbe 3, die wellenförmig (4) ausgebildet sind. An den durch die Wellenberge gebildeten Erhebungen können sich die Bodenränder von Geschirrstücken festhaken, so daß sie weitgehend sicher auf dem Rost gehalten sind.

Figur 1

Die Erfindung bezieht sich auf einen Gitterrost zur Aufnahme von Geschirr, insbesondere in fahrbaren Gestellen bzw. Hordenwagen, mit einem Grundrahmen und in einer Richtung verlaufenden Roststäben.

Gitterroste dieser Art weisen geradlinig verlaufende Roststäbe auf. Da diese Roststäbe entweder aus rostfreiem Stahl bestehen oder verchromt sind, weisen sie eine verhältnismäßig glatte Oberfläche auf, so daß sie in Verbindung mit der Tatsache, daß sämtliche Roststäbe eines Gitterroste in der gleichen Ebene liegen, den Nachteil aufweisen, daß auf Ihnen abgestelltes Geschirr leicht verrutschen kann, wenn geringe Kräfte auf das Geschirr einwirken, was insbesondere dann der Fall ist, wenn Gitterroste dieser Art in verschiebbaren oder verfahrbaren Gestellen oder Hordenwagen verwendet werden.

Aufgabe der Erfindung ist es, einen Gitterrost der eingangs erläuterten Art so auszugestalten, daß Geschirr mit Bodenrand verhältnismäßig rutschsicher abgestellt und zusammen mit dem Rost transportiert werden kann.

Diese Aufgabe wird bei einem Gitterrost der im Oberbegriff des Anspruchs 1 angegebenen Art erfindungsgemäß dadurch gelöst, daß die Roststäbe gewellt ausgeführt sind.

Durch die Wellenform der Roststäbe entstehen Erhebungen und Absenkungen, so daß die Rostoberfläche nicht mehr eben ist. In diese Wellentäler bzw. Absenkungen kann der Bodenrand eines Geschirrgegenstandes eingreifen und findet an dem angrenzenden Wellenberg eine Abstützung, so daß das Geschirrteil verhältnismäßig sicher gegen Abrutschen gehalten ist. Hierbei ist darauf zu achten, daß die durch die Wellenberge entstehenden Erhebungen nicht zu gering sind, d.h., daß die Wellen nicht einen zu flachen Anstiegswinkel aufweisen.

Gute Ergebnisse hinsichtlich der Rutschsicherheit lassen sich erzielen, wenn die Wellenlänge der Roststäbe kürzer als der Abstand zwischen zwei Roststäben ist. Hieraus ergibt sich eine gewisse Zuordnung von Roststababstand zur Wellenlänge. Da die Roststäbe üblicherweise mit Abständen zwischen einem und drei Zentimeter angeordnet sind, so ergibt sich hieraus eine weitgehende Festlegung der Wellenlänge, die im einzelnen je nach Geschirrart, die hauptsächlich benutzt wird, abgestimmt werden kann.

Weiterhin ergeben sich günstige Ergebnisse hinsichtlich der Rutschsicherheit, wenn nach einer weiteren Ausgestaltung der Erfindung die Wellenlänge der Roststäbe zwischen dem Dreifachen und dem Zehnfachen des Durchmessers der Roststäbe liegt. Hierdurch ergibt sich ein Raster an Erhebungen über die Rostoberfläche gesehen, die bei den unterschiedlichsten Durchmessern der Bodenränder der Geschirrstücke zu ausreichend vielen Erhebungen führt, an denen sich der Bodenrand anlegen und ein Abrutschen des Geschirrstückes verhindern kann.

Um den Widerstand gegen Abrutschen zu erhöhen, d.h. um ein möglichst sicheres Verhaken der Geschirrstücke auf dem Rost zu erzielen, sind in weiterer Ausgestaltung der Erfindung die Wellen der Roststäbe sägezahnartig mit geradlinigen Flanken und engen Biegeradien an den Wellenbergen und Wellentälern ausgebildet. Hierdurch ist der Widerstand in Roststabrichtung größer, als wenn die Wellen in sanfter Form entsprechend einem sinusförmigen Verlauf ausgebildet wären.

Die Flankenwinkel können untereinander gleich sein.

Eine noch bessere Verhakung zwischen Rost und aufgesetztem Geschirr ergibt sich, wenn die Wellen der Roststäbe sägezahnartig mit unterschiedlich geneigten Flanken ausgebildet sind und benachbarte Roststäbe jeweils mit entgegengesetzt ausgerichteten Flanken angeordnet sind. Hierdurch ergeben sich in der einen Richtung verhältnismäßig schroff abfallende Sägezähne, die günstige Anlageflächen für den Bodenrand der Geschirrstücke bieten. Da die andere Flanke dafür wesentlich flacher ist, wird ein Nachteil dieser flachen Flanken dadurch vermieden, daß die Sägezähne benachbarter Roststäbe gegeneinander gerichtet sind, d.h. die schroffen Flanken sind im wesentlichen einander gegenüberliegend angeordnet, so daß in beiden Richtungen der Roststäbe von Roststab zu Roststab jeweils sanft abfallende und schroff abfallende Flanken vorhanden sind.

Die Wellen der nebeneinander liegenden Roststäbe können parallel zueinander oder gegeneinander versetzt ausgebildet sein.

Es empfiehlt sich die Roststäbe quer zur Bewegungsrichtung des Gitterrostes anzuordnen, weil die Erhebungen quer zur Längsrichtung der Wellen, d.h. quer zur Roststabrichtung schroffer sind als in Roststabrichtung, wodurch sich ein höherer Widerstand gegen Abrutschen ergibt.

Die Erfindung wird nachstehend anhand von schematisch dargestellter Ausführungsbeispiele näher erläutert. In der Zeichnung zeigen:

Figur 1 :   eine erste Ausführungsform eines Gitterrostes;

Figur 2:   eine Abwandlung der Ausführungsform nach Figur 1

Figur 3:   eine weitere Ausgestaltung eines Gitterrostes; und

Figur 4:   eine Abwandlung des Gitterrostes nach Figur 3.

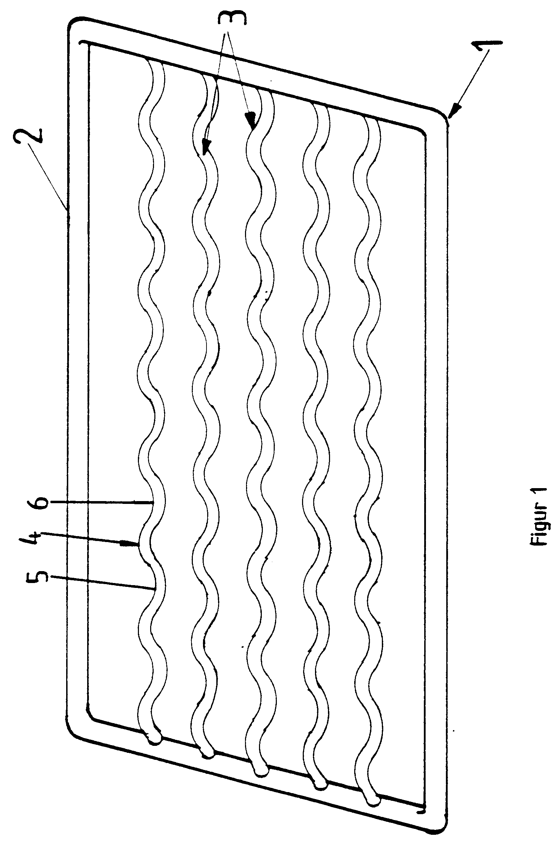

In allen Figuren 1 bis 4 ist jeweils ein Gitterrost zur Aufnahme von Geschirr dargestellt, der insgesamt mit 1 bezeichnet ist. Jeder Gitterrost besteht aus einem Grundrahmen 2 und daran befestigten Roststäben 3. Diese Roste sind insbesondere für Hordenwagen vorgesehen, in denen mehrere Roste übereinander gehalten sind, auf denen Geschirr abgestellt und transportiert wird. Die Längsachse der Roststäbe ist bei diesen Rosten quer zur Bewegungsrichtung angeordnet. Alle Roststäbe 3 sind gewellt ausgeführt, damit zwischen den Bodenrändern der Geschirrstücke und den Erhebungen des Rostes eine gewisse Verhakung eintritt, die ein Verrutschen der auf den Rosten abgestellten Geschirrstücke verhindert.

Bei der Ausführungsform nach Figur 1 sind die Wellen 4, die von einem Wellental 5 zum nächsten Wellental 6 reichen, im wesentlichen sinusförmig ausgebildet, wobei der Abstand zwischen den einzelnen Roststäben 3 geringer ist als dies einer Wellenlänge, d.h. dem Abstand zwischen den Punkten 5 und 6 entspricht. Die Wellen der Roststäbe sind parallel zueinander ausgeführt.

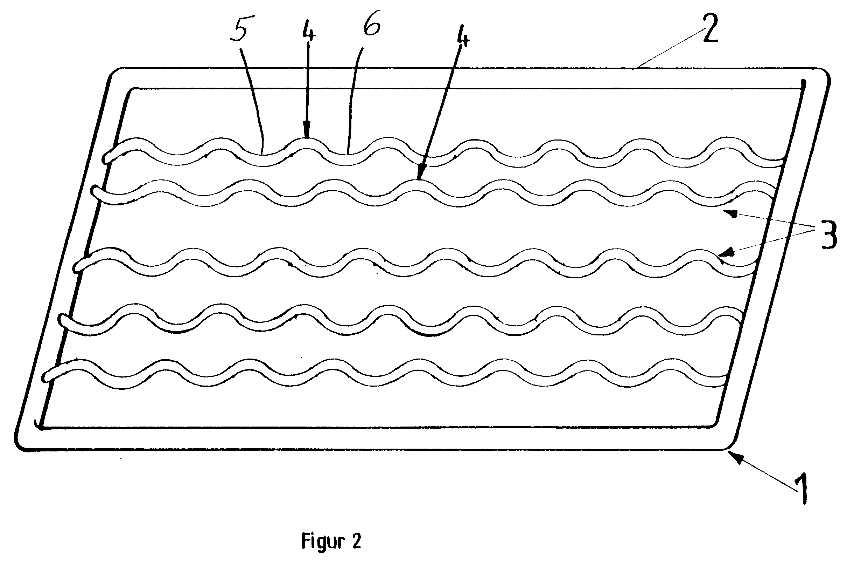

Bei der Ausführungsform nach Figur 2 sind die Roststäbe in gleicher Weise ausgebildet, wie bei der Ausführungsform nach Figur 1, jedoch sind die Wellen gegeneinander versetzt angeordnet, so daß die Erhöhungen der Wellenberge nicht in einer Linie liegen.

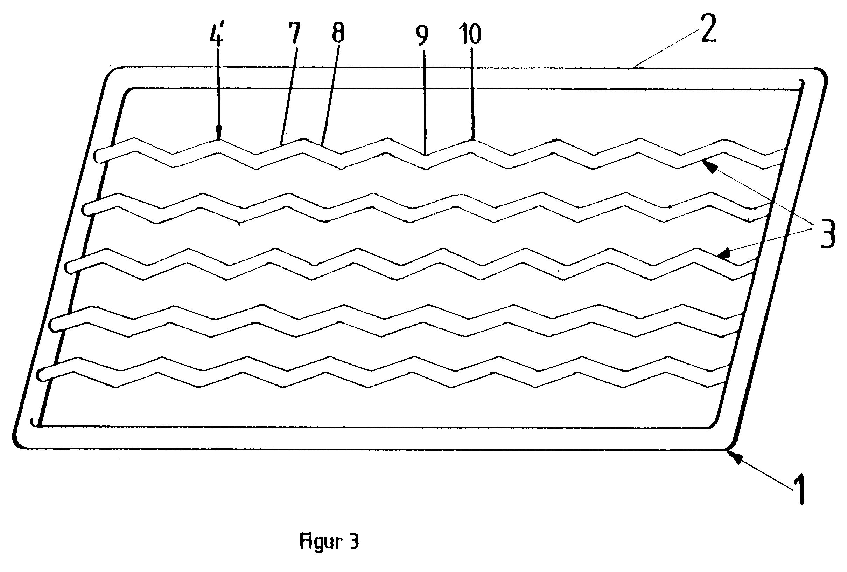

Bei der Ausführungsform nach Figur 3 weisen die Wellen 4' geradlinige Flanken 7 und 8 auf, wobei die Wellentäler 9 und die Wellenberge 10 durch Abrundungen mit geringem Durchmesser gebildet sind, so daß verhältnismäßig schroffe Erhebungen entstehen, an denen die Bodenränder der Geschirrstücke leicht hängenbleiben.

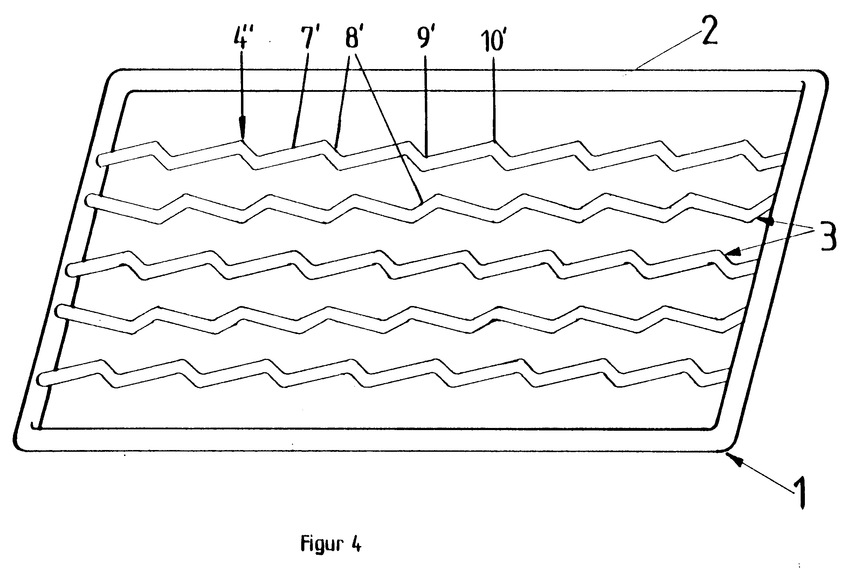

Bei der Ausführungsform nach Figur 4 besteht die Abwandlung darin, daß die sägezahnartig ausgebildeten Wellen 4'' der Roststäbe 3 verschiedenartig geneigte geradlinige Flanken 7' und 8' aufweisen, wobei die Flanken 8' steiler angestellt sind als die Flanken 7'. Damit bei diesem Gitterrost keine bevorzugte Richtung entsteht, sind die jeweils benachbarten Roststäbe entgegengesetzt angeordnet, d.h. die steilen Rostflanken 8' benachbarter Roststäbe stehen sich gegenüber.

Dies wird dadurch erreicht, daß Roststäbe gleicher Ausführung in jeweils abwechselnder Ausrichtung am Grundrahmen 2 befestigt werden. Auf diese Weise entsteht ein Rost, bei dem in beiden entgegengesetzten Richtung der Roststäbe jeweils besonders schroffe Vorsprünge entstehen, die durch die steil abfallenden Flanken 8' geprägt sind. Auch bei dieser Ausführungsform sind die Wellenberge und Wellentäler 9' bzw. 10' durch enge Biegeradien gebildet.

**Patentansprüche**

1. Gitterrost zur Aufnahme von Geschirr, insbesondere in fahrbaren Gestellen bzw. Hordenwagen, mit einem Grundrahmen und in einer Richtung verlaufenden Roststäben, **dadurch gekennzeichnet,** daß die Roststäbe (3) gewellt (4, 4', 4'') ausgeführt sind.

2. Gitterrost nach Anspruch 1, dadurch gekennzeichnet, daß die Wellenlänge (5, 6) der Roststäbe (3) kürzer als der Abstand zwischen zwei Roststäben ist.

3. Gitterrost nach Anspruch 1 oder 2, dadurch gekennzeichnet, daß die Wellenlänge der Roststäbe zwischen dem Dreifachen und dem Zehnfachen des Durchmessers der Roststäbe (3) liegt.

4. Gitterrost nach einem der Ansprüche 1 bis 3, dadurch gekennzeichnet, daß die Wellen (4', 4'') sägezahnartig mit geradlinigen Flanken (7, 8, 7', 8') und engen Biegeradien an den Wellenbergen (10, 10') und Wellentälern (9, 9') ausgebildet sind.

5. Gitterrost nach Anspruch 4, dadurch gekennzeichnet, daß die Flankenwinkel untereinander gleich sind.

6. Gitterrost nach Anspruch 4, dadurch gekennzeichnet, daß die Wellen (4'') der Roststäbe (3) sägezahnartig mit unterschiedlich geneigten Flanken (7', 8') ausgebildet sind, und daß benachbarte Roststäbe (3) jeweils mit entgegengesetzt ausgerichteten Flanken angeordnet sind.

7. Gitterrost nach einem der Ansprüche 1 bis 6, dadurch gekennzeichnet, daß die Wellen (4, 4', 4'') der nebeneinander liegenden Roststäbe (3) parallel zueinander ausgebildet sind.

8. Gitterrost nach einem der Ansprüche 1 bis 6, dadurch gekennzeichnet, daß die Wellen (4, 4', 4'') der nebeneinander liegenden Roststäbe (3) gegeneinander versetzt ausgebildet sind.

9. Gitterrost nach einem der Ansprüche 1 bis 8, dadurch gekennzeichnet, daß die Roststäbe (3) quer zur Bewegungsrichtung des Gitterrostes (1) angeordnet sind.

Figur 1

Figur 2

Figur 3

Figur 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 150 629 (A. E. SANTI)<br><br>* Zusammenfassung; Abbildungen *<br>--- | 1,4,5,7, 9 | B62B3/04<br>B62B5/00<br>A47F5/13 |
| X | DE-A-2 220 154 (AURIOL (GUILDFORD) LTD.)<br>* Abbildungen *<br>--- | 1,7,9 | |
| X | DE-A-2 037 481 (K. EIZENHÖFER)<br>* Seite 5, Zeile 6 - Seite 5, Zeile 19; Abbildungen *<br>--- | 1,7,9 | |
| X | US-A-3 098 568 (T. H. LA PIERRE)<br>* Abbildungen 1-3 *<br><br>----- | 1 | |
| | | | **RECHERCHIERTE SACHGEBIETE (Int. Cl.5)**<br><br>B62B<br>A47F<br>A47B |

Der vorliegende Recherchenbericht wurde für alle Patentansprüche erstellt

| Recherchenort | Abschlußdatum der Recherche | Prüfer |
|---|---|---|
| DEN HAAG | 12 AUGUST 1992 | FRANKS B.G. |

EPO FORM 1503 03.82 (P0403)